(19) Europäisches Patentamt
European Patent Office
Office européen des brevets

(11) **EP 4 183 546 A1**

(12) **EUROPEAN PATENT APPLICATION**

(43) Date of publication:
**24.05.2023 Bulletin 2023/21**

(21) Application number: **21306603.8**

(22) Date of filing: **18.11.2021**

(51) International Patent Classification (IPC):
***B29C 45/00*** *(2006.01)*

(52) Cooperative Patent Classification (CPC):
**B29C 45/0017; B29C 45/0053;** B29C 2045/0058;
B29C 2793/0027; B29C 2793/009; B29L 2031/3005

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Compagnie Plastic Omnium SE
69007 Lyon (FR)**

(72) Inventors:
• **GÖRSE, Hergen**
**Sainte-Julie (FR)**
• **WEGENER, Wieland**
**Sainte-Julie (FR)**

(74) Representative: **LLR
11, boulevard de Sébastopol
75001 Paris (FR)**

(54) **PLASTIC BODY PART WITH ROUNDED UPPER EDGES**

(57) Method for producing a plastic body part (1) for motor vehicles comprising the following steps:
- molding of a plastic panel (2) having a first face (21) and a second face (22) opposed to the first face (21), the plastic panel (2) comprising a groove (12) having rounded upper edges (13) on the first face (21) and deliming a surface of the first face (21),
- laser cutting of the plastic panel (2) at the bottom of the groove (12).

[Fig. 3]

Fig. 3

**Description**

The invention relates to vehicle body part. More precisely, the invention is related to vehicle body parts intended to integrate at least one movable flap covering an opening and the method for producing such body parts. By "flap" is meant any type of element that can perform a function of covering an opening of the body part, for example, a movable cover, flap, shutter.

It is known to produce vehicle body part as an assembly of a molded plastic panel inside which an opening is designed and a molded plastic flap designed to cover the opening.

Plastic panels and flaps have been generally produced as two separate parts and are very complex to produce in terms of costs, color harmony and gap and flushness management. Indeed, regarding color harmony, the current products do not meet this criterion since it is necessary to use more paint on the portions resulting from the cutting, which generates an unsightly excess of paint visible from the exterior of the vehicle that do not meet the specifications of the car manufacturers and therefore require additional steps of reworking. These additional steps are time-consuming and involve additional costs. It is therefore essential to be free from these additional steps.

In an attempt to overcome this problem, it is known to mold a plastic panel into which the flap is cut out and to paint the plastic panel before cutting out the flap. However, even this solution requires repainting the edges of the plastic panel and the flap, as the paint that covered these portions is usually damaged during the laser cutting process.

The invention relates to a method for producing a plastic body part for motor vehicles comprising the following steps:

- molding of a plastic panel having a first face and a second face opposed to the first face, the plastic panel comprising a groove having rounded upper edges on the first face and delimiting a surface of the first face,
- laser cutting of the plastic panel at the bottom of the groove while preserving the rounded profile of said upper edges, forming an opening and a flap intended to cover the opening in a closed position.

So, the method of the invention makes easily and inexpensively possible to realize a plastic body part integrating a flap and a plastic panel both decorated before cutting out the flap from the body panel and without any additional steps of reworking the edges of the first face of the plastic panel and of the first face of the flap. By "decorated", "decorating coat" or "decorating step", it is understood any kind of decoration method of such elements known of the skilled person. It can be for example painting, digital printing, tampon printing, hot stamping, in mould labeling, foil application and even texturing by etching or laser.

In other words, the method according to the invention makes possible to preserve the decorating coating (paint or other finish) located on these edges during laser cutting so that it is not necessary to retouch the decorating coating to meet the specifications of the car manufacturers. Indeed, having rounded upper edges of the groove prevents the formation of an unsightly excess of decorating coating (paint or other finish) along the edges delimiting the opening of the first face of plastic panel and the edges of the first face of the flap, when the first face of the plastic panel alone (if the decorating step takes place before laser cutting) or when both the first face of the plastic panel and the first face of the flap (if the decorating step takes place after laser cutting) receives a decorating coat (paint or other finish).

By "delimiting a surface of this first face", it is understood that the rounded upper edges of the groove can define a closed surface, i.e. the groove extend all around the sides of the surface that will be laser cutting , or they can define an open surface, i.e. the groove does not extend all around the sides of said surface which remains linked to the first face of the plastic panel by at least one side.

In order to save time and space, especially on the production line, the plastic panel is decorated before the step of laser cutting.

In order to optimize the flush arrangement between the first face of the flap and the first face of the plastic panel when the flap is in the closed position, the plastic panel is molded with a projecting portion of the first face of the plastic panel, said projecting portion being comprised in the first face of the flap after laser cutting. Still with the aim of optimizing the flushness, laser cutting of the plastic panel takes place in a non-vertical cutting plane locally with respect to the first face of the plastic panel. More advantageously, the thickness h2 of the laser cutting is defined by the following formula:

[Math 1]

$$h2 = h1 \times \cos \alpha$$

h1 being the thickness of the projecting portion with respect to the rest of the first face of the plastic panel and $\alpha$ being the angle of the non-vertical cutting plane with respect to the first face. Even more advantageously, the thickness of the projecting portion with respect to the rest of the first face of the plastic panel is about 0.4 mm.

The invention also relates to a plastic body part for motor vehicles comprising:

- a plastic panel having an opening, a first face and a second face opposed to the first face and
- a flap cut out from the plastic panel and having a first face and a second face opposed to the first face of the flap, the flap being suitable for closing the panel opening when the flap is positioned in a closed position,

the edges of the first face of the plastic panel delimiting the opening and the edges of the first face of the flap are rounded edges.

Following, other optional features of plastic body part taken alone or in combination:

- the first face of the flap and the first face of the plastic panel are covered with the same coating, preferably said coating being a paint, before the flap is cut out from the plastic panel,
- the first face of flap is flush with the first face of the plastic panel in the closed position,
- the plastic body part comprising means for moving the flap relative to the plastic panel between the closed position and an open position in which the opening is not entirely closed by the flap.

**Brief description of the drawings**

The invention will be better understood on reading the following description, which is given only by way of example and is made with reference to the annexed drawings in which:

[Fig. 1] figure 1 is a top view of a molded plastic panel according to a first embodiment of the invention;
[Fig. 2] figure 2 is a cross-sectional view showing the plastic panel in section AA of Figure 1;
[Fig. 3] figure 3 is a cross-sectional view showing laser cutting of the plastic panel of figure 2;
[Fig. 4] figure 4 is a cross-sectional view showing a plastic body part according to the first embodiment of the invention;
[Fig. 5] figure 5 is a cross-sectional view showing a plastic panel according to a variant of the first embodiment of the invention;
[Fig. 6] figure 6 is a cross-sectional view showing a painted plastic panel according to said variant;
[Fig. 7] figure 7 is a cross-sectional view showing laser cutting of the plastic panel of figure 5;
[Fig. 8] figure 8 is a cross-sectional view showing a plastic body part according to said variant;
[Fig. 9] figure 9 is a cross-sectional view showing a plastic body part of figure 8 in a closed position of the flap;
[Fig. 10] figure 10 is a top view of a plastic body part of the invention with moving means.

**Detailed description**

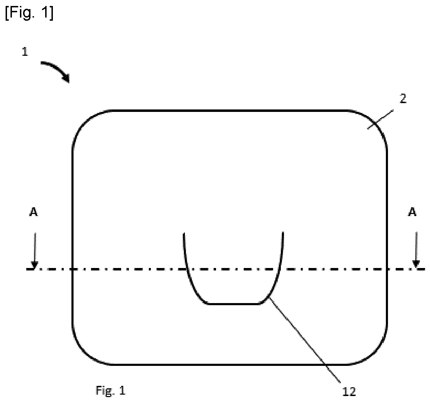

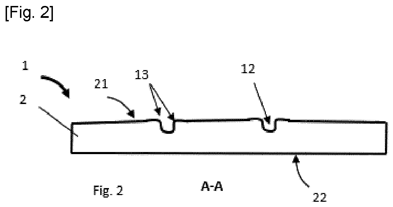

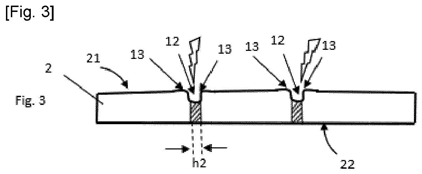

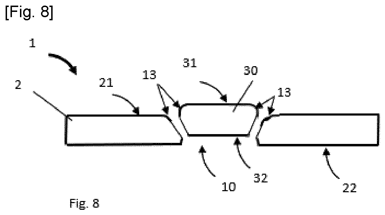

Figures 1 to 10 show a plastic body part according to an embodiment and a variant, designated by the general reference 1. This plastic body part can be made according to a first method for producing or according to a variant of such a method. For the following description, we will use painting as the decoration method used for the method of producing and the plastic body part according to the invention. Of course, as mentioned before, another decoration method can be used instead of or in addition to paint.

First, a plastic panel 2 is molded, such a plastic panel 2 having a first face 21 and a second face 22 opposed to the first face 21. The plastic panel 2 is molded with a groove 12 having rounded upper edges 13 on the first face 21 and delimiting a surface of the first face 21 which is intended to be the flap 30 after the laser cutting step. In the illustrated embodiment and variant, the delimited surface is an open surface which means that the surface intended to be the flap 30 after the laser cutting step remains linked to the first face 21 of the plastic panel 2 by one of its sides.

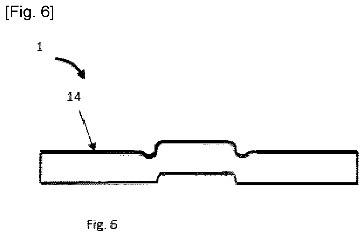

Then, the laser cutting step of the plastic panel 2 is carried out at the bottom of the groove 12 in order to form the flap 30 and the opening 10 while preserving the rounded profile of said upper edges 13. In other words, edges 13 of the flap 30 and edges 13 of the plastic panel 2 delimiting the opening 10 are rounded edges, which is very advantageous for aesthetic reasons, particularly as these edges are easier to cover (with paint 14, as shown on fig. 6). It is possible to paint the plastic panel 2 before laser cutting (fig. 6) while maintaining an excellent harmony of paint for the final part 1, particularly on the edges 13 resulting from the laser cutting which meets the specifications of car manufacturers. It is therefore possible to dispense from all the subsequent steps of reworking that are generally necessary, either to repaint a portion damaged during cutting or to remove excess paint from these edges. This saves time and space on the production line since the plastic panel 2 and the flap 30 can be painted simultaneously without the need for subsequent operations. Furthermore, this allows a perfect color match when the flap 30 and the plastic panel 2 are painted together. Even if the flap 30 and the plastic panel 2 are painted after laser cutting, which may be the case if, for example, they are to be covered with two different coatings, this still saves time and space on the production line since subsequent rework can be avoided. To preserve the rounded profile of said upper edges 13 it is advantageous that the groove 12 has a circular shape, or a substantially circular shape, which has a diameter $h3$ equal to or greater than the thickness $h2$ of the laser cutting.

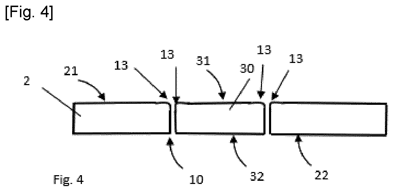

In its final version (fig. 4 and 8-9), the plastic body part 1 comprises:

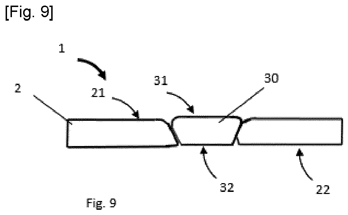

- a plastic panel 2 having an opening 10, a first face 21 and a second face 22 opposed to the first face 21 and
- a flap 30 cut out from the plastic panel 2 and having a first face 31 and a second face 32 opposed to the first face 31 of the flap 30, the flap 30 being suitable for closing the panel opening 10 when the flap 30 is positioned in a closed position (see fig. 4 and 9), the edges 13 of the first face 21 of the plastic panel 2 delimiting the opening 10 and the edges of the first face 31 of the flap 30 are rounded edges 13.

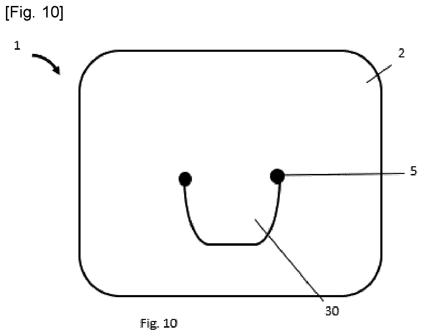

For aerodynamics and/or ventilation reasons, the lap 30 is intended to be moved between the closed position and an open position in which the opening 10 is not entirely closed by the flap 30. To do so, the plastic body part 1 comprises means 5 (fig. 10) for moving the flap 30 relative to the plastic panel 2 between these two positions. Such means 5 are known for the skilled person. It can be for example one or more hinges.

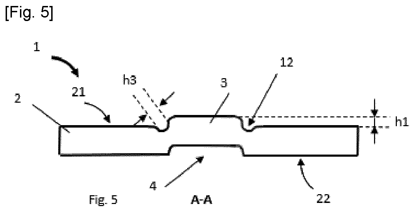

According to a variant of the method of the invention (figs 5 to 9), the plastic panel 2 is molded with a projecting portion 3 of the first face 21, such a projecting portion 3 is sized during the molding step. By sizing the thickness h1 of the projecting portion 3 and knowing the angle $\alpha$ of the non-vertical cutting plane with respect to the first face 21, it is possible to define the thickness h2 of the laser cutting to be made for the next step, thanks to the following formula:

[Math 1]

$$h2 = h1 \times \cos \alpha.$$

So, it is easily possible to make the first face 31 of cut flap 30 completely flush with the first face 21 of the plastic panel 2, when the flap 30 is positioned in a closed position of the panel opening 10 (fig.9), without any additional costs for separate injection or cutting tools. Advantageously, the plastic panel 2 is molded with a recess 4 in the second face 22 opposed to the projecting portion, the recess 4 having a corresponding shape to the shape of the projecting portion 3. Such a recess 4 ensures that the flap will not protrude below the second face of the plastic panel when the flap is in the closed position (fig. 9), which may be preferable in some cases, with regard to the aerodynamic performance of the body part and with regard to final visual appearance requirements of the end-users. To have recess 4 having a corresponding shape to the shape of the projecting portion 3 allows to mold a part which has a constant thickness which improves the injection molding quality of the part.

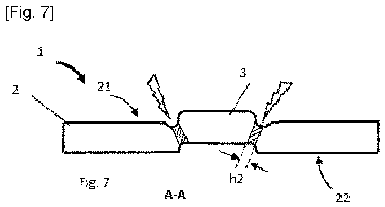

In such a variant of the method of the invention, the laser cutting step of the plastic panel 2 is carried out in a non-vertical cutting plane locally with respect to the first face 21, forming the opening 10 and the flap 30 (composed by the projecting portion 3) (see fig 7). Cutting the first face 21 the plastic panel 2 according to a locally non-vertical cutting plane ensures optimum flushness between the first side 31 of the flap 30 and the first side 21 of the plastic panel 2 when the flap 30 is in the closed position, i.e. both first faces, respectively of the flap 31 and of the plastic panel 21, are in the same plane in the area of the cut (the faces could be slightly curved away from the area of the cut). Such a flush quality is otherwise not possible with a vertical cutting plane. A very good flush quality was observed for a cutting plane forming an angle between 40° and 60° with respect to the first side 21 of the plastic panel 2. A very good flush quality has also been observed when the thickness h1 of the projecting portion is about 0.4 mm, since this particularly small value corresponds to one of the smallest thicknesses achievable by known laser cutting device.

So, it is easily possible to make, without any additional costs for separate injection or cutting tools or without any additional reworking or repainting steps, a plastic body part completely flush when the flap 30 is positioned in a closed position of the panel opening 10 and which has an excellent harmony of paint.

Alternatively, it may be necessary to have thicknesses greater than 0.4mm in some cases (e.g. when the flap contour is been illuminated from the back for design reasons). In such cases, the thickness can be around at least 1.5 mm. To achieve such a thickness it can be use two or more laser cuttings devices in parallel or a single laser cutting device that is repeated, each time parallel to the previous laser cutting.

The invention is not limited to the embodiments shown and other embodiments will be apparent to the skilled person.

**Listing of references**

1: plastic body part
2: plastic panel
3: projecting portion
4: recess

5: means for moving the flap relative to the plastic panel

6: /

7: /

8: /

9: /

10: opening

11: /

12: groove

13: rounded upper edges

14: paint

15: /

16: /

17: /

18: /

19: /

20: /

21: first face of the plastic panel

22: second face of the plastic panel

23: /

24: /

25: /

26: /

27: /

28: /

29: /

30: flap

31: first face of the flap

32: second face of the flap

h1: thickness of the projecting portion

h2: thickness of the laser cutting

**Claims**

1.  Method for producing a plastic body part (1) for motor vehicles comprising the following steps:

    - molding of a plastic panel (2) having a first face (21) and a second face (22) opposed to the first face (21), the plastic panel (2) comprising a groove (12) having rounded upper edges (13) on the first face (21) and delimiting a surface of the first face (21),
    - laser cutting of the plastic panel (2) at the bottom of the groove (12) while preserving the rounded profile of said upper edges (13), forming an opening (10) and a flap (30) intended to cover the opening (10) in a closed position.

2.  Method according to the preceding claim, wherein the plastic panel (2) is decorated before the step of laser cutting.

3.  Method according to any one of the preceding claims, wherein the plastic panel (2) is molded with a projecting portion (3) of the first face (21) of the plastic panel (2), said projecting portion (3) being comprised in the first face (31) of the flap (30) after laser cutting.

4.  Method according to any one of the preceding claims, wherein laser cutting of the plastic panel (2) takes place in a non-vertical cutting plane locally with respect to the first face (21) of the plastic panel (2).

5.  Method according to the claim 4 and 5, wherein thickness (h2) of the laser cutting is defined by the following formula:

[Math 1]

$$h2 = h1 \times \cos \alpha$$

h1 being the thickness (h1) of the projecting portion (30) with respect to the rest of the first face (21) of the plastic panel (2) and $\alpha$ being the angle of the non-vertical cutting plane with respect to the first face (21).

6. Method according to the preceding claim, wherein the thickness (h1) of the projecting portion (3) with respect to the rest of the first face (21) of the plastic panel (2) is about 0.4 mm.

7. Plastic body part (1) for motor vehicles comprising:

   - a plastic panel (2) having an opening (10), a first face (21) and a second face (22) opposed to the first face (21) and
   - a flap (30) cut out from the plastic panel (2) and having a first face (31) and a second face (32) opposed to the first face (31) of the flap (30), the flap (30) being suitable for closing the panel opening (10) when the flap (30) is positioned in a closed position,

   the edges (13) of the first face (21) of the plastic panel (2) delimiting the opening (10) and the edges (13) of the first face (31) of the flap (30) are rounded edges (13).

8. Plastic body part (1) according to the preceding claim, wherein the first face (31) of the flap (30) and the first face (21) of the plastic panel (2) are covered with the same coating, preferably said coating being a paint (14), before the flap (30) is cut out from the plastic panel (2).

9. Plastic body part (1) according to any one of claim 7 or claim 8, wherein the first face (31) of flap (30) is flush with the first face (21) of the plastic panel (2) in the closed position.

10. Plastic body part (1) according to any one of claim 7 to 9, comprising means (5) for moving the flap (30) relative to the plastic panel (2) between the closed position and an open position in which the opening (10) is not entirely closed by the flap (30).

[Fig. 1]

Fig. 1

[Fig. 2]

Fig. 2                    A-A

[Fig. 3]

Fig. 3

[Fig. 4]

Fig. 4

[Fig. 5]

Fig. 5    A-A

[Fig. 6]

Fig. 6

[Fig. 7]

Fig. 7

A-A

[Fig. 8]

Fig. 8

[Fig. 9]

Fig. 9

[Fig. 10]

Fig. 10

Europäisches
Patentamt

European
Patent Office

Office européen
des brevets

# EUROPEAN SEARCH REPORT

| | Application Number |
|---|---|
| | **EP 21 30 6603** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/075411 A1 (PLASTIC OMNIUM CIE [FR]; DEMANGE JEAN-YVES [FR] ET AL.) 19 May 2016 (2016-05-19) * claim 1, claim 5 * | 1-6,8-10 | INV. B29C45/00 |
| A | WO 2011/032064 A1 (AVERY DENNISON CORP [US]; DUAN XINRONG [CN] ET AL.) 17 March 2011 (2011-03-17) * . * | 1-10 | |

| | |
|---|---|
| | **TECHNICAL FIELDS SEARCHED (IPC)** |
| | B29C B29L |

The present search report has been drawn up for all claims

| Place of search | Date of completion of the search | Examiner |
|---|---|---|
| Munich | 4 April 2022 | Tonelli, Enrico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 6603

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2022

| Patent document cited in search report | Publication date | Patent family member(s) | Publication date |
|---|---|---|---|
| WO 2016075411 A1 | 19-05-2016 | CN 107000663 A | 01-08-2017 |
| | | EP 3218739 A1 | 20-09-2017 |
| | | FR 3028442 A1 | 20-05-2016 |
| | | WO 2016075411 A1 | 19-05-2016 |
| WO 2011032064 A1 | 17-03-2011 | AU 2010292022 A1 | 05-04-2012 |
| | | BR 112012005367 A2 | 29-05-2018 |
| | | BR 112012025049 A2 | 24-07-2018 |
| | | CN 102596567 A | 18-07-2012 |
| | | EP 2475521 A1 | 18-07-2012 |
| | | ES 2660567 T3 | 23-03-2018 |
| | | KR 20120089814 A | 13-08-2012 |
| | | KR 20180110233 A | 08-10-2018 |
| | | MY 163697 A | 13-10-2017 |
| | | MY 179391 A | 05-11-2020 |
| | | PL 2475521 T3 | 30-05-2018 |
| | | RU 2491173 C1 | 27-08-2013 |
| | | US 2012177307 A1 | 12-07-2012 |
| | | US 2015239619 A1 | 27-08-2015 |
| | | US 2020290774 A1 | 17-09-2020 |
| | | WO 2011032064 A1 | 17-03-2011 |
| | | ZA 201201735 B | 29-05-2013 |
| | | ZA 201207281 B | 26-03-2014 |

EPO FORM P0459

For more details about this annex : see Official Journal of the European Patent Office, No. 12/82